(19) Europäisches Patentamt
European Patent Office
Office européen des brevets

(11) **EP 2 085 878 A1**

(12) **EUROPEAN PATENT APPLICATION**

(43) Date of publication:
**05.08.2009 Bulletin 2009/32**

(51) Int Cl.:
***G06F 7/72*** *(2006.01)*

(21) Application number: **08305149.0**

(22) Date of filing: **05.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **01.02.2008 EP 08300068**

(71) Applicant: **Thomson Licensing
92100 Boulogne-Billancourt (FR)**

(72) Inventor: **Joye, Marc
35510, Cesson-Sevigne (FR)**

(74) Representative: **Ruellan-Lemonnier, Brigitte
Thomson multimedia
Patent Department
46 Quai A. Le Gallo
92648 Boulogne Cedex (FR)**

(54) **An apparatus and a method for calculating a multiple of a point on an elliptic curve**

(57)    A device and method for calculating a multiple $[kd]\mathbf{P}$ of a point $\mathbf{P}$ on an elliptic curve. Given a point $\mathbf{P}$ on an elliptic curve with a rational point of order $d$, $\mathbf{P}$ is embedded on a $d$-isogenous curve to get $\mathbf{P}' = \varphi(\mathbf{P})$; $\mathbf{Q}' = [k]$ $\mathbf{P}'$ is evaluated on the isogenous curve; and the obtained point is transformed back to the original curve to get the expected result, $\mathbf{Q} = \varphi'(\mathbf{Q}')$, where $\varphi \circ \varphi' = \varphi' \circ \varphi = [d]$.

EP 2 085 878 A1

**Description**

FIELD OF THE INVENTION

The present invention relates generally to cryptography, and more specifically, to secure and efficient implementation of elliptic curve cryptosystems.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Elliptic curve cryptography (ECC) is becoming more and more widespread, owing to, among other things, a key length that is significantly shorter than a Rivest-Shamir-Adleman (RSA) key for a corresponding security level. However, shorter key length is not the only factor to consider when choosing a cryptosystem; for example computation time must also be considered, as a relatively long wait may prove irritating to a user.

A drawback with ECC is that side-channel attacks and in particular simple power analysis (SPA) attacks are a major concern for implementations of elliptic curve cryptosystems. Elliptic curves are more susceptible to these attacks as the basic operations, namely point addition and point doubling, are intrinsically different with the usual Weierstraß form of an elliptic curve. For this reason, several authors [see e.g. Ian Blake, Gadiel Seroussi, and Nigel Smart: "Elliptic Curves in Cryptography", volume 265 of London Mathematical Society Lecture Note Series. Cambridge University Press, 1999] have proposed to use other parameterizations that make possible to use the same formula to add or to double points.

However, the prior art models that can use the same formula to add or double points are restricted to special classes of elliptic curves. For example, the Jacobi model [Olivier Billet and Marc Joye: "The Jacobi model of an elliptic curve and side-channel analysis". In M. Fossorier, T. Høholdt, and A. Poli, editors, Applied Algebra, Algebraic Algorithms and Error-Correcting Codes, volume 2643 of Lecture Notes in Computer Science, pages 34-42. Springer, 2003] requires a point of order 2, the Hessian model [Marc Joye and Jean-Jacques Quisquater: "Hessian elliptic curves and side-channel attacks". In C.K. Koç, D. Naccache, and C. Paar, editors, Cryptographic Hardware and Embedded Systems - CHES 2001, volume 2162 of Lecture Notes in Computer Science, pages 402-410. Springer, 2003] requires a point of 3, and the Edwards model [Daniel J. Bernstein and Tanja Lange: "Faster addition and doubling on elliptic curves". In K. Kurosawa, editor, Advances in Cryptology - ASIACRYPT 2007, volume 4833 of Lecture Notes in Computer Science, pages 29-50, 2007] requires a point of order 4.

Another issue is that the curve parameters cannot always be made small, which usually results in higher running times.

It can thus be seen that it is desired to have a solution that overcomes at least some of the problems of the prior art. The present invention provides such a solution.

SUMMARY OF THE INVENTION

In a first aspect, the invention is directed to a method for computing the multiple $Q = [kd]\,P$ of a point $P$ on an elliptic curve with a rational point of order $d$. $P$ is embedded on a $d$-isogenous curve to get $P' = \varphi(P)$ via isogeny $\varphi$; $Q' = [k]P'$ is evaluated on the $d$-isogenous curve; and the obtained point $Q'$ is transformed back to the original curve to get the expected result, $Q = \varphi'(Q')$, via dual isogeny $\varphi'$ where $\varphi \circ \varphi' = \varphi' \circ \varphi = [d]$.

In a preferred embodiment, $d = 2$. It is advantageous that the elliptic curve is given by a Weierstrass equation of the form $Y^2 = X^3 + a_2 X^2 + a_4 X$ with two additional points of order 2, $(\theta_1, 0)$ and $(\theta_2, 0)$, and the 2-isogenous curve is given by a Edwards equation of the form $Y^2 (1 - 4 \theta_1 X^2) = 1 - 4 \theta_2 X^2$.

In a second aspect, the invention is directed to an apparatus adapted to calculate the multiple $Q = [kd]\,P$ of a point $P$ on an elliptic curve with a rational point of order $d$. The apparatus comprises a processor adapted to: embed $P$ on a $d$-isogenous curve to get $P' = \varphi(P)$ via isogeny $\varphi$; evaluate $Q' = [k]P'$ on the $d$-isogenous curve; and transform the obtained point back to the original curve to get the expected result, $Q = \varphi'(Q')$, via dual isogeny $\varphi'$ where $\varphi \circ \varphi' = \varphi' \circ \varphi = [d]$.

In a preferred embodiment, $d = 2$. It is advantageous that the elliptic curve is given by a Weierstrass equation of the form $Y^2 = X^3 + a_2 X^2 + a_4 X$ with two additional points of order 2, $(\theta_1, 0)$ and $(\theta_2, 0)$, and the 2-isogenous curve is given by a Edwards equation of the form $Y^2 (1 - 4 \theta_1 X^2) = 1 - 4 \theta_2 X^2$.

BRIEF DESCRIPTION OF THE DRAWINGS

Preferred features of the present invention will now be described, by way of non-limiting example, with reference to the accompanying drawings, in which:

Figure 1 illustrates a device for calculations on an elliptic curve according to a preferred embodiment of the invention; and

Figure 2 illustrates a general method for computing the multiple $Q$ of a point $P$ on an elliptic curve with a rational point of order d according to a preferred embodiment of the present invention.

PREFERRED EMBODIMENT OF THE INVENTION

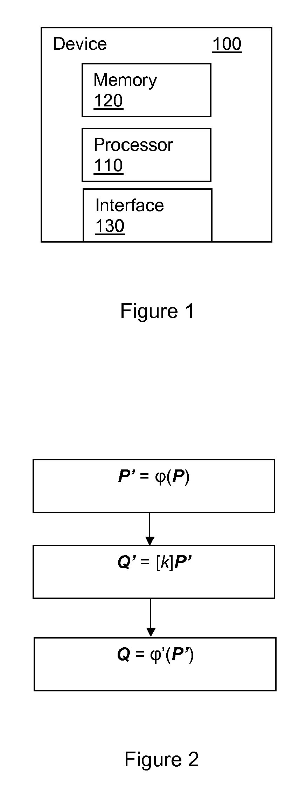

Figure 1 illustrates a device 100 for calculations on an elliptic curve according to a preferred embodiment of the invention. The device 100 comprises at least one processor 110 (hereinafter "processor") adapted to execute a computer program that performs the calculations of the method described hereinafter. It should be noted that the processor 110 may also be implemented in hardware, or a combination of software and hardware. The device 100 further comprises a memory 120 adapted to store data, such as for example intermediate calculation results from the processor 110. The device 100 also comprises at least one interface 130 (hereinafter "interface") for interaction with other devices (not shown).

Figure 2 illustrates a general method for computing the multiple $Q$ of a point $P$ on an elliptic curve with a rational point of order $d$ according to a preferred embodiment of the present invention; $Q = [dk]P$. First $P$ is embedded 210 on a $d$-isogenous curve to get $P'$ via isogeny $\varphi$, $P' = \varphi(P)$. Then $Q' = [k]P'$ is evaluated 220 on the isogenous curve. Finally the obtained point is transformed 230 back to the original curve to get the expected result via dual isogeny $\varphi'$, $Q = \varphi'(Q')$, where $\varphi \circ \varphi' = \varphi' \circ \varphi = [d]$.

Given a point of order $d$, Vélu's formulae [Jacques Vélu: "Isogénies entre courbes elliptiques". C.R. Acad. Sc. Paris, volume 273, pages 238-241, 1973] may be used to find the corresponding $d$-isogenous curve. Examples for $d$ = 2, 3, 5 and 7 are given in Laska's book [Michael Laska: "Elliptic Curves over Number Fields with Prescribed Reduction Type". Friedr. Vieweg & Sohn, 1983].

The general method illustrated in Figure 2 will now be described in more detail. The main operation for elliptic curve cryptography is the point multiplication in a large prime-order subgroup of an elliptic curve. Let $<P>$ denote the subgroup generated by a point $P$ of order $n$ on an elliptic curve.

Consider an elliptic curve that has three points of order 2 and that cannot be written as a so-called Edwards curve. It can be shown that an elliptic curve over a field K of characteristic $\neq 2$ given by the following Weierstraß equation can be put in Edwards form.

$C_{/K} : Y^2 = X^3 + a_2 X^2 + a_4 X$ where $a_4$ is a square in K

Given a point of order $d$, a $d$-isogenous curve may easily be constructed. Since (0, 0) in $C$ has order 2, it should be noted that elliptic curve $C$ is 2-isogenous to elliptic curve $D$ given by

$$D_{/K} : Y'^2 = X'^3 + 2(\theta_1 + \theta_2) X'^2 + (\theta_1 - \theta_2)^2 X'$$

where $(\theta_1, 0)$ and $(\theta_2, 0)$ are the two other points of order 2 on $C$.

Therefore, the isogenous curve, $D$, can now be turned into the Edwards form, $E$. $\varphi$ and $\varphi'$ respectively denote the isogeny from $C$ to $E$ and the dual isogeny from $E$ to $C$. The evaluation of $Q = [m]P$ in $C$ can then be calculated as follows:

1. compute $P' = \varphi(P)$ on the 2-isogenous Edwards curve $E$;
2. compute $m' = m/2 \pmod{n}$;
3. evaluate $Q' = [m']P'$ in $E$; and
4. return $Q = \varphi'(Q')$ in $C$.

A second preferred embodiment is when the given elliptic curve has a point of order 4 (and so also a point of order 2). The method hereinbefore with a 2-isogeny can be useful for extended Jacobi quartics given by an equation of the form $Y^2 = \varepsilon X^4 - 2\delta X^2 + 1$ to make the curve coefficients, $\varepsilon$ and/or $\delta$, small values. Indeed, over fields K in which -1 is not a square, it may easily be shown that every elliptic curve with a rational point of order 4 is 2-isogenous to an extended Jacobi quartic with parameter $\varepsilon = 1$, say $F$. The computation of $Q = [m]P$ in $C$ can then be calculated as follows:

1. compute $P' = \psi(P)$ on the 2-isogenous extended Jacobi quartic $F$ with parameter $\varepsilon = 1$. ($\psi$ denotes the isogeny from $C$ to $F$);

2. compute $m' = m/2 \pmod{n}$;
3. evaluate $\boldsymbol{Q}' = [m']\boldsymbol{P}'$ in $F$;
4. return $\boldsymbol{Q} = \psi'(\boldsymbol{Q}')$ in $C$. ($\psi'$ denotes the dual isogeny from $F$ to $C$).

An advantage is that the computation can be faster than with an arbitrary value of $\varepsilon$. It is also possible to consider curve equations with a small $\delta$, or even with small $\varepsilon$ and $\delta$.

The method in this patent makes use of a $d$-isogeny on an elliptic curve with a point of order $d$ so as to enlarge the set of possible elliptic curves that can be rewritten under a suitable form and/or to get small curve parameters. This can allow quicker and more secure calculations of a multiple of a point on the elliptic curve.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method for computing the multiple $\boldsymbol{Q} = [kd]\,\boldsymbol{P}$ of a point $\boldsymbol{P}$ on an elliptic curve with a rational point of order $d$, comprising the steps of:

   embedding (210) $\boldsymbol{P}$ on a $d$-isogenous curve to get $\boldsymbol{P}' = \varphi(\boldsymbol{P})$ via isogeny $\varphi$;
   evaluating (220) $\boldsymbol{Q}' = [k]\boldsymbol{P}'$ on the $d$-isogenous curve; and
   transforming (230) the obtained point $\boldsymbol{Q}'$ back to the original curve to get the expected result, $\boldsymbol{Q} = \varphi'(\boldsymbol{Q}')$, via dual isogeny $\varphi'$ where $\varphi \circ \varphi' = \varphi' \circ \varphi = [d]$.

2. The method of claim 1, wherein $d = 2$.

3. The method of claim 2, wherein the elliptic curve is given by a Weierstrass equation of the form $Y^2 = X^3 + a_2 X^2 + a_4 X$ with two additional points of order 2, $(\theta_1, 0)$ and $(\theta_2, 0)$, and the 2-isogenous curve is given by a Edwards equation of the form $Y^2 (1 - 4 \theta_1 X^2) = 1 - 4 \theta_2 X^2$.

4. An apparatus (100) adapted to calculate the multiple $\boldsymbol{Q} = [kd]\,\boldsymbol{P}$ of a point $\boldsymbol{P}$ on an elliptic curve with a rational point of order $d$, the apparatus (100) comprising a processor (110) adapted to:

   embed $\boldsymbol{P}$ on a $d$-isogenous curve to get $\boldsymbol{P}' = \varphi(\boldsymbol{P})$;
   evaluate $\boldsymbol{Q}' = [k]\boldsymbol{P}'$ on the $d$-isogenous curve; and
   transform the obtained point $\boldsymbol{Q}'$ back to the original curve to get the expected result, $\boldsymbol{Q} = \varphi'(\boldsymbol{Q})$, via dual isogeny $\varphi'$ where $\varphi \circ \varphi' = \varphi' \circ \varphi = [d]$.

5. The apparatus of claim 4, wherein $d = 2$.

6. The apparatus of claim 5, wherein the elliptic curve is given by a Weierstrass equation of the form $Y^2 = X^3 + a_2 X^2 + a_4 X$ with two additional points of order 2, $(\theta_1, 0)$ and $(\theta_2, 0)$, and the 2-isogenous curve is given by a Edwards equation of the form $Y^2 (1 - 4 \theta_1 X^2) = 1 - 4 \theta_2 X^2$.

Device                    <u>100</u>

Memory
<u>120</u>

Processor
<u>110</u>

Interface
<u>130</u>

Figure 1

$$\boldsymbol{P'} = \varphi(\boldsymbol{P})$$

$$\boldsymbol{Q'} = [k]\boldsymbol{P'}$$

$$\boldsymbol{Q} = \varphi'(\boldsymbol{P'})$$

Figure 2

Europäisches
Patentamt

European
Patent Office

Office européen
des brevets

# EUROPEAN SEARCH REPORT

Application Number

EP 08 30 5149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRIER E, JOYE M: "Fast Point Multiplication on Elliptic Curves Through Isogenies" APPLIED ALGEBRA, ALGEBRAIC ALGORITHMS AND ERROR-CORRECTING CODES, vol. 2643, 2003, pages 43-50, XP002520639 | 1,2,4,5 | INV. G06F7/72 |
| Y | * abstract * * page 3, paragraph 4 - page 4 * * page 4; figure 1 * | 3,6 | |
| X | JOYE M ET AL: "PROTECTIONS AGAINST DIFFERENTIAL ANALYSIS FOR ELLIPTIC CURVE CRYPTOGRAPHY//- AN ALGEBRAIC APPROACH -" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS; [LECTURE NOTES IN COMPUTER SCIENCE], BERLIN : SPRINGER, DE, vol. 2162, 14 May 2001 (2001-05-14), pages 377-390, XP008002642 ISBN: 978-3-540-42521-2 * abstract * * page 379, paragraph 4.1 - page 381 * | 1,4 | |
| X | EP 1 306 749 A (MATSUSHITA ELECTRIC IND CO LTD [JP]) 2 May 2003 (2003-05-02) * abstract * * figure 11 * | 1,3 | TECHNICAL FIELDS SEARCHED (IPC) G06F |

-/--

The present search report has been drawn up for all claims

| Place of search | Date of completion of the search | Examiner |
|---|---|---|
| The Hague | 23 March 2009 | Post, Katharina |

EPO FORM 1503 03.82 (P04C01)

Europäisches
Patentamt

European
Patent Office

Office européen
des brevets

# EUROPEAN SEARCH REPORT

Application Number

EP 08 30 5149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,Y | DANIEL J BERNSTEIN ET AL: "Faster Addition and Doubling on Elliptic Curves" ADVANCES IN CRYPTOLOGY Â ASIACRYPT 2007; [LECTURE NOTES IN COMPUTER SCIENCE], SPRINGER BERLIN HEIDELBERG, BERLIN, HEIDELBERG, vol. 4833, 2 December 2007 (2007-12-02), pages 29-50, XP019083764 ISBN: 978-3-540-76899-9 * abstract * * page 30, line 1 - page 33, last line * ----- | 3,6 | |
| D,A | BILLET O ET AL: "THE JACOBI MODEL OF AN ELLIPTIC CURVE AND SIDE-CHANNEL ANALYSIS" APPLIED ALGEBRA, ALGEBRAIC ALGORITHMS AND ERROR-CORRECTING CODES. INTERNATIONAL SYMPOSIUM AAECC, XX, XX, 12 May 2003 (2003-05-12), pages 34-42, XP001160517 * the whole document * ----- | 1-6 | |

TECHNICAL FIELDS
SEARCHED    (IPC)

The present search report has been drawn up for all claims

| Place of search | Date of completion of the search | Examiner |
|---|---|---|
| The Hague | 23 March 2009 | Post, Katharina |

EPO FORM 1503 03.82 (P04C01)

**ANNEX TO THE EUROPEAN SEARCH REPORT
ON EUROPEAN PATENT APPLICATION NO.**

EP 08 30 5149

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2009

| Patent document cited in search report | | Publication date | Patent family member(s) | | Publication date |
|---|---|---|---|---|---|
| EP 1306749 | A | 02-05-2003 | DE | 60223775 T2 | 30-10-2008 |
| | | | US | 2003081771 A1 | 01-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IAN BLAKE ; GADIEL SEROUSSI ; NIGEL SMART.** Elliptic Curves in Cryptography. Cambridge University Press, 1999, vol. 265
- The Jacobi model of an elliptic curve and side-channel analysis. **OLIVIER BILLET ; MARC JOYE.** Applied Algebra, Algebraic Algorithms and Error-Correcting Codes. Springer, 2003, vol. 2643, 34-42
- Hessian elliptic curves and side-channel attacks. **MARC JOYE ; JEAN-JACQUES QUISQUATER.** Cryptographic Hardware and Embedded Systems - CHES 2001. Springer, 2003, vol. 2162, 402-410
- Faster addition and doubling on elliptic curves. **DANIEL J. BERNSTEIN ; TANJA LANGE.** Advances in Cryptology - ASIACRYPT 2007. 2007, vol. 4833, 29-50
- **JACQUES VÉLU.** Isogénies entre courbes elliptiques. *C.R. Acad. Sc. Paris,* 1973, vol. 273, 238-241
- **MICHAEL LASKA.** Elliptic Curves over Number Fields with Prescribed Reduction Type. Friedr. Vieweg & Sohn, 1983